# FASCICULE DE BREVET EUROPEEN

(11) **EP 0 682 191 B1**
(45) Date de publication et mention de la délivrance du brevet: **08.10.1997**
(21) Numéro de dépôt: 95401048.4
(22) Date de dépôt: 05.05.1995
(51) Int. Cl.: F16F 9/504, B60N 2/52

(54) **Dispositif de sécurité pour système transporté à bord d'un aéronef**
Sicherheitsvorrichtung für ein System an Bord eines Fahrzeuges, insbesondere eines Flugzeuges
Safety device for a system on-board a vehicle, especially an aircraft

(30) Priorité: 11.05.1994 FR 9405809
(43) Date de publication de la demande: 15.11.1995
(73) Titulaire: MESSIER BUGATTI, F-78140 Velizy Villacoublay (FR)
(72) Inventeur: Bouchez, Bernard, F-91120 Palaiseau (FR)
(74) Mandataire: Jaunez, Xavier

(56) Documents cités:
- DE-B- 1 045 256
- DE-C- 802 211
- FR-A- 912 553
- FR-A- 1 048 137
- FR-A- 1 105 479
- FR-A- 1 531 990
- FR-A- 2 242 264
- FR-E- 93 128
- GB-A- 1 072 463
- US-A- 1 492 328
- US-A- 2 329 803
- PATENT ABSTRACTS OF JAPAN vol. 17 no. 541 (M-1488) ,29 Septembre 1993 & JP-A-05 147892 (HITACHI JUKI SEIZO) 15 Juin 1993,
- PATENT ABSTRACTS OF JAPAN vol. 008 no. 154 (M-310) ,18 Juillet 1984 & JP-A-59 050807 (KAYABA KOGYO KK) 24 Mars 1984,

## Description

L'invention concerne un dispositif de sécurité pour système transporté à bord d'un véhicule, notamment d'un aéronef, tel qu'un hélicoptère, destiné à assurer une protection en cas de choc, pour faire face en particulier pour un aéronef à une situation d'atterrissage en catastrophe ou "crash".

Le document FR-A-93 128 décrit un dispositif de sécurité agencé sur le siège d'un véhicule et qui absorbe l'énergie par déformation.

Le terme "système transporté" doit être compris dans son sens le plus large, c'est-à-dire englobant aussi bien des objets transportés de tous types, amarrés par élingage à l'intérieur de la cellule du véhicule, que des objets et des personnes, par exemples des passagers et leur siège.

La cellule d'un aéronef et les amortisseurs de ses atterrisseurs sont conçus pour absorber l'énergie cinétique emmagasinée par la masse totale en mouvement lors d'un atterrissage en catastrophe. En particulier, avec un hélicoptère, la vitesse verticale d'atterrissage peut atteindre 12 m/s : les amortisseurs des atterrisseurs absorbent alors une partie de l'énergie cinétique, et le complément est absorbé par la cellule de l'hélicoptère sous forme de déformation ou de rupture partielle de celle-ci.

Pour les amortisseurs-vérins spécialement conçus pour une telle situation, on pourra se référer aux documents EP-A-0 564 325, EP-A-0 564 324, EP-A-0 051 506 et EP-0 014 660 émanant de la demanderesse, ainsi qu'aux documents EP-A-0 275 735, EP-A-0 115 435 et EP-A-0 072 323.

Malgré la limitation de l'accélération (dans une direction verticale) obtenue au niveau des atterrisseurs, il est encore possible que l'accélération au niveau des système transportés dépasse un seuil critique (par exemple supérieur à 20 g, ce qui entraîne alors des dommages majeurs aux personnes transportées), soit du fait que cette limitation est insuffisante, soit en raison des mouvements de l'hélicoptère dans des directions relativement aléatoires.

En particulier l'accélération au niveau des sièges peut dépasser le seuil critique concerné pour les personnes qui sont assises dessus. De même l'accélération au niveau d'un élingage peut dépasser le seuil critique concerné pour les objets qui sont amarrés dans la cellule de l'aéronef.

La solution habituellement utilisée consiste alors à utiliser des amortisseurs par lesquels les objets concernés (sièges, charges transportées) sont reliés à la structure de l'aéronef. En particulier, on utilise actuellement des amortisseurs d'écrêtage disposés sous les sièges, entre chaque siège et la cellule de l'aéronef. Par exemple, on connaît des dispositifs à déformation plastique d'un tube par enfoncement d'une bille de plus gros diamètre (chaque attache verticale du siège étant alors en appui sur une bille disposée au col d'ouverture d'un tube destiné à se déformer plastiquement en absorbant de l'énergie), un tel système étant certes économique, mais peu précis (fonction des tolérances de fabrication et du matériau utilisé).

D'une façon générale, avec l'utilisation d'amortisseurs, l'accélération du système transporté dépend nécessairement de sa masse et des variations de vitesse du support auquel il est attaché. Il est donc très difficile d'être précis dès lors que le poids de la personne (avec éventuellement son équipement lorsqu'il s'agit d'hélicoptères militaires) peut varier dans une large mesure, de sorte que les efforts pour une même accélération peuvent varier du simple au double. Ceci est naturellement encore plus sensible s'il s'agit de sièges multi-places qui peuvent être occupés par une ou plusieurs personnes.

L'invention a précisément pour but de résoudre ce problème, en concevant un dispositif de sécurité ne présentant pas les inconvénients et limitations précités.

L'invention a ainsi pour objet de réaliser un dispositif de sécurité capable d'assurer une fonction de limiteur d'accélération de façon rapide, fiable et performante, en s'affranchissant des variations de la masse du système à protéger et des variations de la vitesse du support auquel il est attaché.

Il s'agit plus particulièrement d'un dispositif de sécurité pour système transporté à bord d'un véhicule, notamment d'un aéronef, ledit système étant relié à la structure du véhicule par au moins un élément à corps cylindrique et tige télescopique, caractérisé en ce que le corps et la tige de chaque élément télescopique délimitent deux chambres intérieures de fluide qui sont normalement isolées l'une de l'autre, un passage de communication étant prévu entre ces deux chambres et étant normalement fermé par une valve de laminage associée, ladite valve de laminage étant pilotée par un moyen sensible à l'accélération utilisant une masse mobile dans la direction de l'axe de l'élément télescopique et un ressort taré associé à cette masse, ledit moyen étant agencé pour déclencher l'ouverture de la valve de laminage dès que l'accélération détectée dépasse un seuil qui est prédéterminé en fonction du système à protéger, la modification de la longueur de l'élément télescopique maintenant ainsi l'accélération du système en-dessous dudit seuil.

Selon un mode d'exécution particulier, le moyen sensible à l'accélération utilise une masse mobile et un ressort taré de chaque côté de cette masse, de façon à déclencher l'ouverture de la valve de laminage dans le cas où l'élément télescopique est est soumis à une accélération excessive, soit en compression, soit en traction.

Une telle variante sera par exemple très intéressante dans le cas de l'élingage d'objets dans la cellule de l'aéronef. Dans le cas des sièges, on pourra en général se contenter d'un seul sens de fonctionnement, et donc d'un seul ressort taré.

De préférence, la commande de la valve de laminage est assurée par un distributeur qui est directement actionné par la masse mobile. Avantageusement alors, la valve de laminage est asservie en position au distributeur, de façon à suivre en permanence ledit distributeur.

Il est par ailleurs intéressant de prévoir que la valve de laminage et/ou le moyen sensible à l'accélération sont montés à l'intérieur de l'élément télescopique, par exemple dans le corps de celui-ci. Avantageusement alors, la commande de la valve de laminage est assurée par un distributeur réalisé sous la forme d'un tiroir pilote coaxial et intérieur à cette valve, ledit tiroir pilote étant directement couplé à la masse mobile qui est montée pour coulisser coaxialement à ladite valve, et la valve de laminage est normalement maintenue en position fermée par un appui direct de la masse mobile qui est poussée contre ladite valve par le ressort taré associé.

De préférence encore, l'une des chambres intérieures est à haute pression et l'autre à basse pression, cette dernière étant pressurisée en permanence par un moyen à ressort et élément déformable, tel qu'une membrane ou un soufflet. Avantageusement alors, le corps et la tige de l'élément télescopique sont normalement verrouillés entre eux par des goupilles de cisaillement qui sont prévues pour lâcher lorsque le seuil prédéterminé d'accélération est atteint pour un système protégé de masse minimale.

D'autres caractéristiques et avantages de l'invention apparaîtront plus clairement à la lumière de la description qui va suivre et des dessins annexés, concernant un mode de réalisation particulier, en référence aux figures où :
- la figure 1 illustre un siège relié à la structure d'un véhicule tel qu'un aéronef par trois paires d'éléments télescopiques, constituant chacun un dispositif de sécurité conforme à l'invention, permettant ainsi d'avoir une limitation d'accélération à la fois dans les directions verticale et horizontale ;
- la figure 2 est une vue schématique, essentiellement fonctionnelle, d'un élément télescopique réalisé conformément à l'invention ;
- la figure 3 est une coupe axiale d'un tel élément télescopique, avec ses composants structurels essentiels, dans la position normale (valve de laminage fermée), cette coupe étant complétée par la figure 4 qui est une coupe partielle selon IV-IV de la figure 3 ;
- la figure 5 illustre une autre variante, dans laquelle le moyen sensible à l'accélération, associé à un vérin, peut intervenir dans les deux sens (accélération maintenue en-dessous d'un seuil prédéterminé à la fois en compression et en traction).

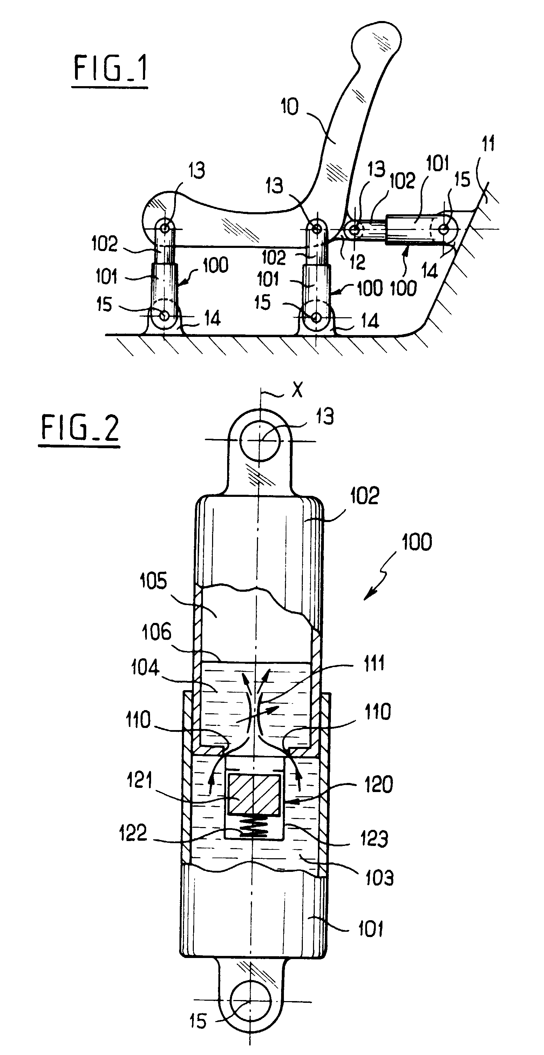

La figure 1 illustre un siège 10 relié à la structure 11 d'un aéronef au moyen de dispositifs de sécurité conformes à l'invention, ces dispositifs se présentant sous la forme d'éléments télescopiques 100, reliés de façon articulée au siège 10 et à la structure 11 de l'aéronef. On a prévu ici deux paires d'éléments télescopiques agencés selon une direction essentiellement verticale, en étant articulés en 13 sur le siège 10, et en 15 sur un appendice 14 solidaire de la structure d'aéronef 11. Une autre paire d'éléments télescopiques 100 est agencée dans une direction essentiellement horizontale, chacun étant articulé en 13 sur un appendice 12 solidaire du siège 10, et en 15 sur un appendice 14 solidaire de la structure d'aéronef 11. Chaque élément télescopique 100 comporte un corps cylindrique 101 et une tige télescopique 102, et la longueur de l'élément télescopique reste constante tant que l'accélération dans la direction de son axe ne dépasse pas un seuil qui est prédéterminé en fonction du système à protéger. En l'espèce, la protection conférée pour le siège 10 et la ou les personnes concernées, est organisée avec une limitation d'accélération du système tant dans une direction verticale que dans une direction horizontale.

Le principe de tels éléments télescopiques diffère donc radicalement des amortisseurs d'écrêtage de type traditionnel, dans la mesure où les éléments télescopiques sont ici capables de modifier leur longueur pour maintenir l'accélération du système transporté en-dessous d'un seuil prédéterminé, en rendant la protection indépendante à la fois de la masse du système et des variations de vitesse du support auquel il est attaché. Dans le cas des amortisseurs d'écrêtage, l'effort obtenu est toujours constant (par exemple effort de déformation plastique d'un tube par la bille associée) et ne peut tenir compte des différences de masses, alors que les éléments télescopiques réalisés conformément à l'invention permettent d'obtenir un seuil d'effort de liaison qui est variable en fonction de la masse concernée.

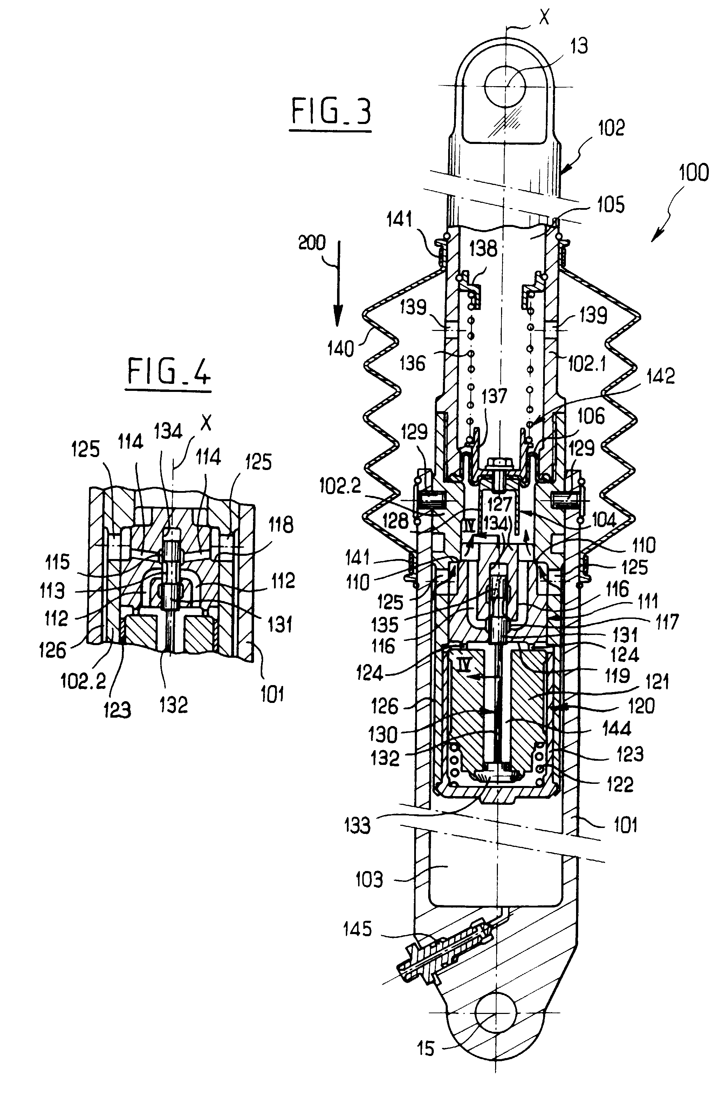

La vue schématique, essentiellement fonctionnelle, de la figure 2, permet de distinguer l'agencement de base d'un élément télescopique 100 réalisé conformément à l'invention. L'élément télescopique 100 comporte un corps cylindrique 101 d'axe X dans lequel est agencée une tige télescopique 102. Le corps 101 et la tige 102 présentent des appendices d'extrémité permettant leur montage, par exemple en 15 pour la liaison à la structure d'aéronef, et en 13 pour la liaison à un siège. Le corps 101 et la tige 102 délimitent deux chambres intérieures de fluide, notées 103, 104, qui sont normalement isolées l'une de l'autre. Le terme "normalement" indique que l'on est dans une situation de fonctionnement normal, en dehors de tout contexte critique de choc ou d'atterrissage en catastrophe. Un passage de communication 110 est prévu entre les deux chambres 103, 104, et ce passage est normalement fermé par une valve de laminage associée 111. Le fluide situé dans la chambre 104 peut être en contact direct avec une chambre de gaz 105, la surface de transition étant notée 106 (cette surface de transition pourra être la surface supérieure du fluide, ou encore être matérialisée par un élément déformable tel que membrane ou soufflet, ainsi que cela sera décrit plus en détail en référence à la figure 3).

Conformément à un aspect essentiel de l'invention, la valve de laminage 111 est pilotée par un moyen 120 sensible à l'accélération, utilisant une masse 121 mobile dans la direction de l'axe X de l'élément télescopique 100 et un ressort taré 122 associé à cette masse, ledit moyen étant agencé pour déclencher l'ouverture de la valve de laminage dès que l'accélération détectée dépasse un seuil qui est prédéterminé en fonction du système à protéger. En l'espèce, on a représenté schématiquement un boîtier 123 contenant une masse 121 pouvant coulisser à la façon d'un piston dans la direction de l'axe X, avec un ressort d'appui taré 122 qui maintient la masse mobile 121 en butée haute. Cette position correspond à la fermeture de la valve de laminage 111. Dès que l'accélération détectée par le moyen 120 dépasse un seuil prédéterminé, la masse mobile 121 comprime le ressort taré 122, ce qui commande l'ouverture de la valve de laminage 111, et permet de limiter l'accélération en la maintenant au niveau de ce seuil prédéterminé. Dès que l'accélération est redescendue en-dessous de ce seuil, la masse mobile 121 revient en position de butée haute par l'action de son ressort 122, et la valve de laminage 111 se referme. On réalise ainsi un véritable asservissement de l'accélération de la masse du système à protéger par rapport au tarage fixe du ressort. Si la masse du système transporté est toujours la même, le limiteur d'accélération limite l'effort de liaison à une valeur pré-établie. Par contre, dans le cas où la masse du système transporté est variable, le seuil d'effort de liaison est alors également variable en fonction de la masse, ce qui permet donc de tenir compte, pour l'application mentionnée plus haut, du poids différent du ou des occupants du siège, et ce, même s'il s'agit d'un siège multiplaces. Bien entendu, à chaque phase d'ouverture de la valve de laminage, on obtient une diminution correspondante de la longueur de l'élément télescopique, de sorte que la longueur totale de l'élément télescopique devra être prévue suffisante pour pouvoir réaliser la fonction de limitation d'accélération dans des conditions optimales.

Le moyen 120 sensible à l'accélération, utilisant une masse mobile et un ressort taré associés, constitue ainsi un véritable organe de mesure de l'accélération du système transporté, ce qui garantit une parfaite adaptabilité du dispositif de sécurité au type de système concerné.

Si l'on utilise six éléments télescopiques pour assurer la liaison entre un siège et la structure d'aéronef, comme cela est illustré sur la figure 1, on est assuré de limiter l'accélération du système transporté (le siège et éventuellement son ou ses occupants) en-dessous d'un seuil prédéterminé, à la fois dans une direction verticale et dans une direction horizontale, avec le cas échéant la possibilité de prévoir des seuils différents pour ces deux directions.

Les figures 3 et 4 permettent de distinguer les différents composants constituant un élément télescopique 100 du type précité.

On retrouve ainsi le corps 101 dans lequel est disposé une tige télescopique 102, ici réalisé en deux parties 102.1, 102.2, de façon à assurer le maintien d'une membrane déformable de séparation 106. La partie 102.2 de la tige se prolonge à l'intérieur du corps 101 pour recevoir le moyen 120 sensible à l'accélération et la valve de laminage 111. La masse mobile 121 est ainsi montée dans son boîtier 123, en pouvant coulisser dans celui-ci, et le ressort taré associé 122 maintient cette masse mobile en appui contre la valve de laminage 111, ou plus précisément en l'espèce contre des ergots 124 saillant en face inférieure de celle-ci, de façon à permettre le libre passage du fluide sous la surface 119 de ladite valve, qui est la surface de pleine section. La portion 102.2 du tube 102 présente en outre des orifices 125 permettant au fluide de la chambre 103, qui est de préférence une chambre haute pression, d'arriver, après être passé dans un espace annulaire 126 délimité avec la surface intérieure du corps 101, au niveau d'une surface annulaire 118 de la valve de laminage 111, surface qui correspond à la section annulaire de ladite valve. Le siège de la valve 111 définit avec le bord d'appui correspondant un passage 110 qui est normalement fermé, et qui ne peut être ouvert que par l'activation du moyen 120 sensible à l'accélération.

Dans le mode de réalisation représenté ici, la commande de la valve de laminage 111 est assurée par un distributeur 130 qui est directement actionné par la masse mobile 121. En l'espèce, le distributeur 130 est réalisé sous la forme d'un tiroir pilote 131 reçu dans un alésage central borgne associé 134 de la valve 111, lequel tiroir est raccordé par une tige 132 à un embout 133 de fixation qui est solidaire de la masse mobile 121. La masse 121 présente à cet effet un évidement central 144 permettant le passage de la tige de liaison 132. Ainsi, dès que la masse mobile 121 commence à comprimer le ressort 122, elle entraîne en même temps le tiroir pilote 131, et l'on va voir que l'agencement prévu ici réalise un asservissement en position de la valve de laminage 111 par rapport au distributeur 130, ladite valve suivant en permanence le distributeur, et donc la masse mobile.

La valve de laminage 111 présente intérieurement deux canaux 116 qui débouchent en partie supérieure de celle-ci et communiquent entre eux par une chambre annulaire 117 ; ainsi que cela est mieux visible sur la figure 4, on constate que la valve 111 comporte également deux autres canaux intérieurs 112 qui débouchent inférieurement au niveau de la surface de pleine section 119 de ladite valve, et se rejoignent au niveau de la chambre centrale 113 délimitée par la partie centrale plus mince du tiroir pilote 131. La valve 111 comporte également deux canaux transversaux 114 débouchant latéralement au-dessus de la surface de section annulaire 118, et communiquant entre eux par une chambre annulaire 115. Ainsi que cela est visible sur la figure 3, on constate enfin que le tiroir pilote 131 présente en partie haute un canal de communication 135 facilitant le libre coulissement relatif dudit tiroir et de la valve 111.

Au-dessus de la valve de laminage 111, on distingue la deuxième chambre de fluide 104, qui est de préférence une chambre basse pression, laquelle chambre est délimitée par la membrane déformable 106 précitée. La membrane 106, dont le bourrelet périphérique est pincé entre les deux portions 102.1, 102.2 formant la tige télescopique 102, est soumise à l'action d'un ressort d'appui 136 portant sur une coupelle de fixation 137 contre laquelle la partie centrale de la membrane 106 est maintenue en appui par un manchon de centrage 128 portant normalement sur l'extrémité centrale supérieure 127 de la valve 111. La partie supérieure du ressort 136 est maintenue par une bague 138 bloquée axialement à l'intérieur de la tige 102. L'ensemble 142 constitué par la membrane 106 et le ressort d'appui associé 136 constitue un moyen servant à pressuriser en permanence la chambre basse pression 104 et à autoriser les dilatations différentielles. La portion 102.1 de la tige 102 présente enfin des orifices latéraux 139, et on distingue un soufflet extérieur de protection 140 maintenu en position au niveau de ses deux extrémités par des colliers associés 141. On distingue enfin, au voisinage de l'extrémité d'articulation du corps 101, une valve 145 servant au remplissage associé au conditionnement initial de l'appareil.

Il est par ailleurs prévu des goupilles de cisaillement 129 disposées entre le corps 101 et la tige 102, lesquelles goupilles verrouillent normalement ce corps et cette tige, et sont prévues pour lâcher lorsque le seuil prédéterminé d'accélération est atteint pour un système protégé de masse minimale. On est ainsi assuré que les goupilles de cisaillement lâcheront avant que n'intervienne le moyen 120 sensible à l'accélération en ouvrant la valve de laminage 111 jusqu'à ce que l'accélération redescende en-dessous du seuil prédéterminé, avec une diminution correspondante de la longueur de l'élément télescopique 100, ceci dans le sens de la compression dudit élément télescopique, comme cela est rappelé par la direction de la flèche 200. La présence de ces goupilles de cisaillement 129 évite en outre d'avoir un appui permanent sur le fluide lors du fonctionnement normal, ce qui confère une bonne protection au regard d'éventuelles fuites hydrauliques.

Dans la position de repos qui est illustrée sur la figure 3, le fluide de la chambre haute pression passe par le passage annulaire 126 et les orifices latéraux 125, puis par les canaux 114, la chambre 115, la chambre 113, et les canaux 112, pour parvenir enfin au niveau de la surface de pleine section 119 de la valve 111. La surface de section annulaire 118 est par ailleurs également soumise à la pression du fluide. La valve 111 est donc équilibrée hydrauliquement, et son maintien en position fermée est seulement assuré par le ressort de rappel 122. Dès que l'accélération dans la direction 200 dépasse le seuil prédéterminé, la masse mobile 121 comprime le ressort de rappel 122, et entraîne avec elle le tiroir pilote 131, ce qui a pour effet de couper la communication fluidique par la chambre centrale 113 pour le fluide haute pression, de sorte que ce fluide haute pression ne parvient plus sur la surface de pleine section 119 de la valve 111. Le flux de haute pression n'agit donc que sur la surface de section annulaire 118, de sorte que la valve 111 descend également, en suivant en permanence le tiroir pilote 131. Le fluide s'échappe par ailleurs par la chambre 117 en remontant par les canaux axiaux 116. La valve de laminage 111 est ainsi montée en piston suiveur, ce qui permet d'obtenir un fonctionnement à la fois fiable et rapide.

En plus de l'asservissement de position entre la valve de laminage 111 et le distributeur pilote, on a également un asservissement de l'accélération de la masse du système à protéger par rapport au tarage fixe du ressort de rappel 122. En effet, si le passage 110 est trop ouvert, le fluide passe sans résistance et le ressort 122 reprend rapidement le dessus en faisant croître la pression et l'accélération. Inversement, si le passage est insuffisamment ouvert, la pression et l'accélération diminuent.

Il est intéressant de noter qu'en dehors des forces de frottement ou hydrodynamiques, le tiroir pilote 131 n'est soumis à aucune force pouvant perturber la mesure d'accélération. De ce fait, le dispositif est particulièrement sensible, et peut intervenir dans un temps minimal, par exemple de l'ordre de trois millisecondes.

En cas de mise en service du dispositif de sécurité précédemment décrit, l'afflux de fluide haute pression dans la chambre 104 a en général pour effet de briser la membrane 106, ce qui laisse le libre passage dans la chambre 105, le fluide pouvant alors arriver rapidement et sans résistance jusqu'aux orifices de sortie 139. Ceci implique naturellement un reconditionnement ultérieur de l'élément télescopique dans le cas d'une telle situation.

Le seuil d'accélération prédéterminé pourra être choisi de l'ordre de 15 à 20g si des personnes sont concernées, ou à une autre valeur s'il s'agit de masses inertes, en fonction de la nature des masses à protéger.

Dans tous les cas, l'ouverture de la valve de laminage s'effectue en fonction de la décélération, et non de la pression, avec un effort qui est automatiquement adapté à la masse à protéger concernée. L'énergie dissipée dépend de la masse à protéger et de la courbe d'enfoncement prévue : elle peut être variable suivant les applications, et elle détermine la longueur de l'élément télescopique.

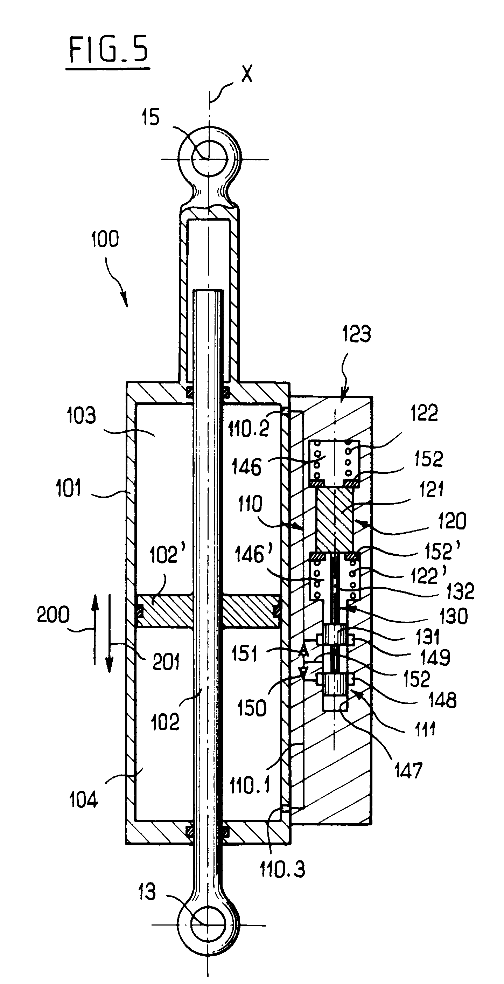

On a illustré sur la figure 5 une variante dans laquelle le moyen sensible à l'accélération, associé à un vérin, peut intervenir dans les deux sens ( l'accélération est alors maintenue en dessous d'un seuil prédéterminé à la fois en compression, et en traction).

Le corps 101 de l'élément télescopique 100 est ici un cylindre, et la tige télescopique 102 est une tige coulissante présentant un piston 102'. On retrouve les chambres 103 et 104, de part et d'autre du piston 102', et ces chambres peuvent être mises en communication l'une avec l'autre par le passage 110, qui est ici constitué par une canalisation 110.1 reliant entre elle des orifices 110.2 et 110.3 des chambres 103 et 104. On distingue également un corps latéral 123 dans lequel on retrouve un moyen à masse mobile 121 couplé à un distributeur 130 comportant un tiroir 131 coulissant dans un alésage associé 147 dudit corps. Cette variante se différencie de la précédente dans la mesure où le corps 123 présente maintenant deux espaces 146, 146' dans chacun desquels est disposé un ressort 122, 122' en appui par une rondelle associée 152, 152' au niveau de chacune des deux extrémités de la masse mobile 121. Le corps 123 présente en outre deux chambres annulaires 148, 149 qui sont en communication avec la canalisation 110.1, avec entre ces communications deux clapets anti-retour 150, 151 de part et d'autre d'une ligne de liaison centrale 152. On a schématisé en 200 et 201 les deux directions respectivement de compression et de traction pour la tige de cet élément télescopique 100.

Si le corps 101 présente soudain une accélération dépassant un seuil prédéterminé, en rapport avec le tarage du ressort 122, dans le cas d'une compression selon la flèche 200, la masse mobile 121 comprime alors le ressort 122 et le fluide de la chambre 103 peut passer par l'orifice 110.2, la chambre 149, la ligne centrale 152, le clapet 150, et enfin l'orifice 110.3. En cas d'accélération dans la direction 201, qui est la direction inverse, la masse mobile 121 va alors se déplacer dans l'autre direction, en comprimant le ressort associé 122', le seuil prédéterminé d'accélération pouvant alors être le même ou différent du seuil déterminé par le ressort taré 122, et c'est alors le fluide de la chambre 104 qui passe par l'orifice 110.3, puis la chambre 148, la ligne centrale 152, le clapet 151, et enfin l'orifice 110.2. En l'espèce, la valve de laminage 111 est confondue avec le tiroir pilote 131. En variante, si les dimensions le permettent, on pourra naturellement disposer le dispositif de limitation d'accélération à l'intérieur du cylindre du vérin. Un tel mode d'exécution en particulièrement intéressant dans le cas d'un élingage d'objets à l'intérieur de l'aéronef, car il procure une sécurité dans deux directions opposées.

A titre indicatif, on pourra utiliser une masse mobile de l'ordre de 200 grammes, et choisir le tarage du ressort ou des ressorts associés de façon à déterminer le seuil d'accélération désiré.

On est ainsi parvenu à réaliser un dispositif de sécurité assurant une fonction de limiteur d'accélération de façon rapide, fiable et performante, en s'affranchissant totalement des variations de la masse du système à protéger et des variations de la vitesse du support auquel il est attaché.

Le dispositif qui vient d'être décrit pourra naturellement être monté sur d'autres types de véhicules, notamment des véhicules automobiles.

L'invention n'est pas limitée aux modes de réalisation qui viennent être décrits, mais englobe au contraire toute variante reprenant, avec des moyens équivalents, les caractéristiques essentielles énoncées plus haut.

## Revendications

1. Dispositif de sécurité pour système transporté à bord d'un véhicule, notamment d'un aéronef, ledit système étant relié à la structure du véhicule par au moins un élément à corps cylindrique et tige télescopique, caractérisé en ce que le corps (101) et la tige (102) de chaque élément télescopique (100) délimitent deux chambres intérieures de fluide (103, 104) qui sont normalement isolées l'une de l'autre, un passage de communication (110) étant prévu entre ces deux chambres et étant normalement fermé par une valve de laminage associée (111), ladite valve de laminage étant pilotée par un moyen (120) sensible à l'accélération utilisant une masse (121) mobile dans la direction de l'axe (X) de l'élément télescopique et un ressort taré (122 ; 122') associé à cette masse, ledit moyen étant agencé pour déclencher l'ouverture de la valve de laminage dès que l'accélération détectée dépasse un seuil qui est prédéterminé en fonction du système à protéger, la modification de la longueur de l'élément télescopique (100) maintenant ainsi l'accélération du système en-dessous dudit seuil.

2. Dispositif selon la revendication 1, caractérisé en ce que le moyen (120) sensible à l'accélération utilise une masse mobile (121) et un ressort taré (122, 122') de chaque côté de cette masse, de façon à déclencher l'ouverture de la valve de laminage (111) dans le cas où l'élément télescopique est soumis à une accélération excessive, soit en compression, soit en traction.

3. Dispositif selon la revendication 1 ou la revendication 2, caractérisé en ce que la commande de la valve de laminage (111) est assurée par un distributeur (130) qui est directement actionné par la masse mobile (121).

4. Dispositif selon la revendication 3, caractérisé en ce que la valve de laminage (111) est asservie en position au distributeur (130), de façon à suivre en permanence ledit distributeur.

5. Dispositif selon l'une des revendications 1 à 4, caractérisé en ce que la valve de laminage (111) et/ou le moyen (120) sensible à l'accélération sont montés à l'intérieur de l'élément télescopique (100), par exemple dans le corps (101) de celui-ci.

6. Dispositif selon la revendication 5, caractérisé en ce que la commande de la valve de laminage (111) est assurée par un distributeur réalisé sous la forme d'un tiroir pilote (131) coaxial et intérieur à cette valve, ledit tiroir pilote étant directement couplé à la masse mobile (121) qui est montée pour coulisser coaxialement à ladite valve.

7. Dispositif selon la revendication 6, caractérisé en ce que la valve de laminage (111) est normalement maintenue en position fermée par un appui direct de la masse mobile (121) qui est poussée contre ladite valve par le ressort taré associé (122).

8. Dispositif selon l'une des revendications 1 à 7, caractérisé en ce que l'une (103) des chambres intérieures est à haute pression et l'autre (104) à basse pression, cette dernière étant pressurisée en permanence par un moyen (142) à ressort (136) et élément déformable (106), tel qu'une membrane ou un soufflet.

9. Dispositif selon la revendication 8, caractérisé en ce que le corps (101) et la tige (102) de l'élément télescopique (100) sont normalement verrouillés entre eux par des goupilles de cisaillement (129) qui sont prévues pour lâcher lorsque le seuil prédéterminé d'accélération est atteint pour un système protégé de masse minimale.

## Patentansprüche

1. Sicherheitsvorrichtung für ein an Bord eines Fahrzeuges, insbesondere eines Flugzeuges transportiertes System, wobei das System mit der Fahrzeugstruktur durch mindestens ein Element verbunden ist, welches ein zylindrisches Gehäuse und eine Teleskopstange umfaßt, dadurch **gekennzeichnet,** daß das Gehäuse (101) und die Stange (102) jedes Teleskopelementes (100) zwei innere Fluidkammern (103, 104) begrenzen, die normalerweise voneinander getrennt sind, wobei zwischen den beiden Kammern ein Verbindungsgang (110) vorgesehen ist, welcher normalerweise von einem zugehörigen Drosselventil (111) verschlossen ist, wobei das Drosselventil von einer Einrichtung (120) vorgesteuert ist, die beschleunigungsabhängig reagiert, wobei sie eine in Richtung der Achse (X) des Teleskopelementes bewegliche Masse (121) und eine mit dieser verbundene geeichte Feder (122; 122') verwendet, und wobei die Einrichtung so ausgebildet ist, daß sie ein Öffnen des Drosselventils auslöst, wenn die erfaßte Beschleunigung einen in Abhängigkeit des zu schützenden Systems vorbestimmten Grenzwert überschreitet, so daß durch eine Änderung der Länge des Teleskopelementes (100) die Beschleunigung des Systems unterhalb des Grenzwertes gehalten wird.

2. Vorrichtung nach Anspruch 1, dadurch **gekennzeichnet,** daß die beschleunigungsabhängig reagierende Einrichtung (120) eine bewegliche Masse (121) und je eine geeichte Feder (122, 122') auf beiden Seiten dieser Masse verwendet, um ein Öffnen des Drosselventils (111) auszulösen, wenn das Teleskopelement einer zu großen Beschleunigung ausgesetzt ist, unabhängig davon, ob es sich dabei um eine Druck- oder eine Zugbeanspruchung handelt.

3. Vorrichtung nach Anspruch 1 oder Anspruch 2, dadurch **gekennzeichnet,** daß die Steuerung des Drosselventils (111) durch ein Wegeventil (130) erfolgt, das direkt von der beweglichen Masse (121) betätigt wird.

4. Vorrichtung nach Anspruch 3, dadurch **gekennzeichnet,** daß das Drosselventil (111) bezüglich des Wegeventils (130) eine Nachlaufposition hat, so daß es diesem Wegeventil ständig folgt.

5. Vorrichtung nach einem der Ansprüche 1 bis 4, dadurch **gekennzeichnet,** daß das Drosselventil (111) und/oder die beschleunigungsabhängig reagierende Einrichtung (120) im Inneren des Teleskopelementes (100), beispielsweise in dessen Gehäuse (101) angeordnet sind.

6. Vorrichtung nach Anspruch 5, dadurch **gekennzeichnet,** daß die Steuerung des Drosselventils (111) durch ein Wegeventil erfolgt, das als im Inneren des Drosselventils koaxial zu diesem angeordneter Steuerschieber (131) ausgebildet ist, der direkt mit der beweglichen Masse (121) gekoppelt ist, die koaxial zum Drosselventil verschiebbar gelagert ist.

7. Vorrichtung nach Anspruch 6, dadurch **gekennzeichnet,** daß das Drosselventil (111) normalerweise durch die unmittelbar daran anliegende bewegliche Masse (121), die von der zugehörigen geeichten Feder (122) gegen das Drosselventil gedrückt wird, im geschlossenen Zustand gehalten wird.

8. Vorrichtung nach einem der Ansprüche 1 bis 7, dadurch **gekennzeichnet,** daß eine (103) der Innenkammern mit Hochdruck und die andere (104) mit Niederdruck beaufschlagt ist, wobei die letztere durch eine Einrichtung (142) mit einer Feder (136) und einem verformbaren Element (106), wie z.B. einer Membran oder einem Balgen, ständig auf ihrem Druck gehalten wird.

9. Vorrichtung nach Anspruch 8, dadurch **gekennzeichnet,** daß das Gehäuse (101) und die Stange (102) des Teleskopelementes (100) normalerweise durch Abscherstifte (129) gegeneinander blockiert sind, die dazu ausgebildet sind, dann nachzugeben, wenn der vorbestimmte Beschleunigungsgrenzwert für ein zu schützendes System minimaler Masse erreicht ist.

## Claims

1. A safety device for a system transported on board a vehicle, in particular an aircraft, said system being connected to the structure of the vehicle via at least one element having a cylindrical body and a telescopic rod, the device being characterized in that the body (101) and the rod (102) of each element (100) together define two internal fluid chambers (103, 104) which are normally isolated from each other, a communication passage (115) being provided between said two chambers and normally being closed by an associated throttling valve (111), said throttling valve being controlled by acceleration-sensing means (120) using a mass (121) that is movable in the axial direction (X) of the telescopic element and that is associated with a rated spring (122; 122'), said means being organized to cause the throttling valve to open as soon as the sensed acceleration exceeds a threshold which is predetermined as a function of the system to be protected, the acceleration of the system thus being kept below said threshold by the telescopic element (100) changing in length.

2. A device according to claim 1, characterized in that the acceleration-sensing means (100) uses a single moving mass (121) and a rated spring (122, 122') on either side of said mass, thereby causing the throttling valve (111) to be opened whenever the telescopic element is subjected to excessive acceleration, both in compression and in traction.

3. A device according to claim 1 or 2, characterized in that the throttling valve (111) is controlled by a slide valve (130) which is directly actuated by the moving mass (121).

4. A device according to claim 3, characterized in that the throttling valve (111) is servo controlled to the position of the slide valve (130) so as to track said slide valve continuously.

5. A device according to any one of claims 1 to 4, characterized in that the throttling valve (111) and/or the acceleration-sensing means (10) are mounted inside the telescopic element (100), e.g. inside the body (101) thereof.

6. A device according to claim 5, characterized in that the throttling valve (111) is controlled by a slide valve implemented in the form of a pilot slide (131) that is coaxial with and inside said throttling valve, said pilot slide being directly coupled to the moving mass (121) which is mounted to slide along the axis of said throttling valve.

7. A device according to claim 6, characterized in that the throttling valve (111) is normally kept in the closed position by direct thrust from the moving mass (121) which is urged against said valve by the associated rated spring (122).

8. A device according to any one of claims 1 to 7, characterized in that one of the internal chambers (103) is a high-pressure chamber, while the other one is a low-pressure chamber (104), the low-pressure chamber being continuously pressurized by means (142) comprising a spring (136) and a deformable element (106) such as a membrane or a bellows.

9. A device according to claim 8, characterized in that the body (101) and the rod (102) of the telescopic element (100) are normally locked together by shear pins (129) which are designed to shear when the predetermined acceleration threshold is reached by a protected system of minimum mass.
